Europäisches Patentamt

**European Patent Office**

**Office européen des brevets**

(19)

(11) Numéro de publication: **0 041 413**
**A1**

(12) DEMANDE DE BREVET EUROPEEN

(21) Numéro de dépôt: **81400663.1**

(51) Int. Cl.³: **B 60 R 19/06**

(22) Date de dépôt: **28.04.81**

(30) Priorité: **03.06.80 FR 8012270**

(43) Date de publication de la demande:
**09.12.81 Bulletin 81/49**

(84) Etats contractants désignés:
**BE DE GB IT NL SE**

(71) Demandeur: **REGIE NATIONALE DES USINES RENAULT**
**Boite postale 103 8-10 avenue Emile Zola**
**F-92109 Boulogne-Billancourt(FR)**

(72) Inventeur: **Goupy, Marcel**
**7, avenue de Nancy**
**F-92210 Saint Cloud(FR)**

(74) Mandataire: **Réal, Jacques et al,**
**8 & 10, avenue Emile Zola**
**F-92109 Boulogne Billancourt(FR)**

(54) Profilés galbés absorbeurs d'énergie.

(57) Pare-chocs composite pour véhicule automobile obtenu par surmoulage d'un profilé galbé présentant un rayon de courbure constant résultant de la pultrusion de fils ou de mèches de verre imprégnés de résine synthétique durcissable.

Le profilé (1) est constitué d'une face frontale (21) prolongée par des bordures (22) qui lui sont sensiblement perpendiculaires, dont les extrémités libres présentent des rebords (4) coopérant de préférence avec les éléments de forme correspondante d'au moins une plaque de fermeture (2), localisée en particulier dans les zones de moment fléchissant maximum.

Application à la constitution de pare-chocs pour véhicules automobiles.

Fig.1

Profilés galbés absorbeurs d'énergie

La présente invention se rapporte à l'utilisation de profilés galbés fabriqués par pultrusion constituant des absorbeurs d'énergie à partir de matière plastique armée comportant des renforts unidirectionnels, notamment pour la réalisation de pare-chocs ou de renforts de carrosserie pour véhicules automobiles.

La demanderesse a essentiellement décrit dans son brevet français 73/46.906 les procédés et dispositifs de base permettant d'obtenir des pare-chocs par pultrusion courbe, ces derniers étant renforcés dans certaines zones, appelés à subir des efforts intenses.

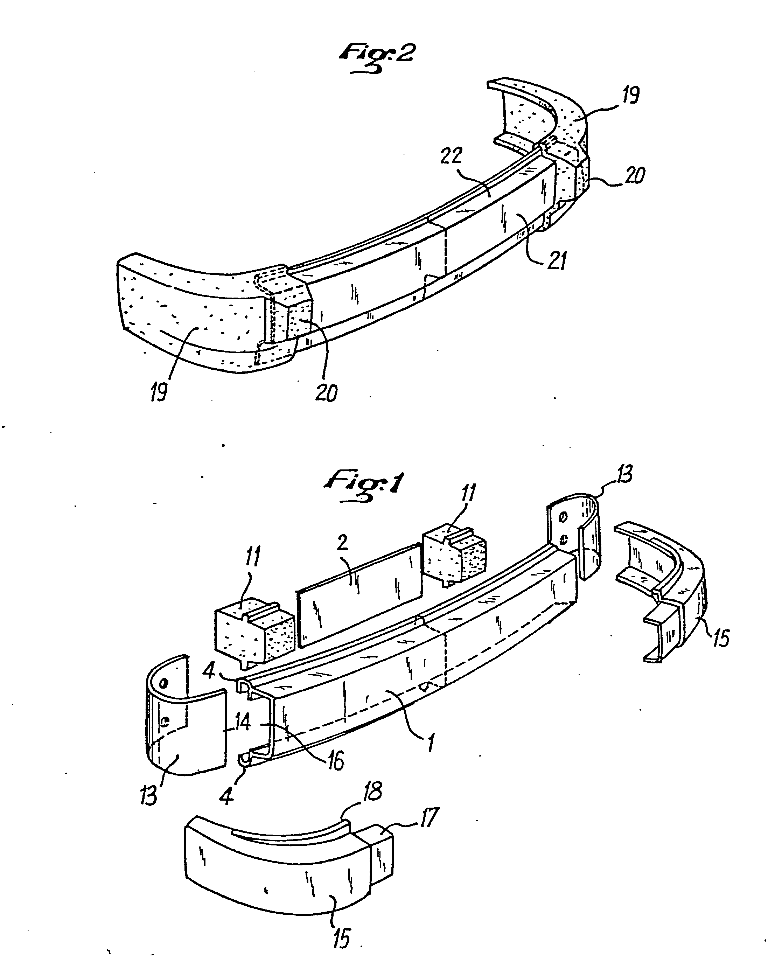

L'objet de la présente invention est de développer dans le détail certaines formes de produits particulièrement intéressants obtenus à partir de la technologie précédente. L'invention sera décrite à titre d'exemples non limitatifs, au regard des figures 1 à 20 ci-jointes, qui représentent respectivement :

- la figure 1, une vue en perspective éclatée d'un ensemble absorbeur d'énergie,

- la figure 2, une vue en perspective d'une première variante de absorbeur assemblé,

- les figures 3 à 6, un détail vu en perspective de divers variantes d'assemblage des éléments de base,

- les figures 7 à 10, une vue en coupe de quatre possibilités structurelles d'un profilé,

- les figures 11 à 16, des vues en plan de trois variantes relatives à la courbure des extrémités du profilé respectivement avant et après cette opération,

- la figure 17, une vue en plan du produit sortant de la filière et des différentes zones qui le composent,

- figures 18 à 20, des vues en plan d'une quatrième variante de conformation des extrémités, respectivement avant, pendant et après.

Considérons l'absorbeur d'énergie pour véhicules automobiles de la figure 1. Il comporte en premier lieu un profilé galbé 1 obtenu par pultrusion, par exemple selon les procédés et dispositifs précédemment développés dans le brevet de la demanderesse évoqué ci-dessus. En substance, on opère de la façon suivante :

On entraîne à travers un bac contenant par exemple une résine synthétique thermodurcissable du type polyester, comportant un catalyseur activable à la chaleur, des fils ou des mèches de verre ainsi qu'un ruban tissé ou non. L'ensemble précédent est alors guidé entre des dispositifs conformateurs pré-déterminant la forme du profilé, la réaction de réticulation étant au passage initiée par un chauffage à coeur au moyen d'un appareil à haute fréquence par perte diélectrique. Le profilé passe ensuite dans une filière de forme adéquate dans laquelle, encore déformable, il prend son profil définitif et sa courbure, son trajet s'effectuant en effet selon une ligne courbe de rayon constant.

Le produit obtenu en continu est ainsi tiré hors du dispositif précédent par des mâchoires qui se déplacent angulairement jusqu'à un poste de tronçonnage aux longueurs voulues.

De préférence, les profilés sont composés/de fils continus parallèles principalement orientés dans le sens de la pultrusion dans les zones travaillant en traction, de mèches comportant des fils continus et des fils bouclés dans les zones travaillant en cisaillement, de mat de fils coupés ou de filaments continus, comportant des fils continus parallèles orientés dans le sens de la pultrusion, dans les zones travaillant en compression. On pourrait utiliser des fibres de renforcement de natures différentes, présentant des modules différents, ces fibres étant disposées à des distances de la fibre neutre qui sont inversement proportionnelles à leurs caractéristiques d'allongement à la rupture.

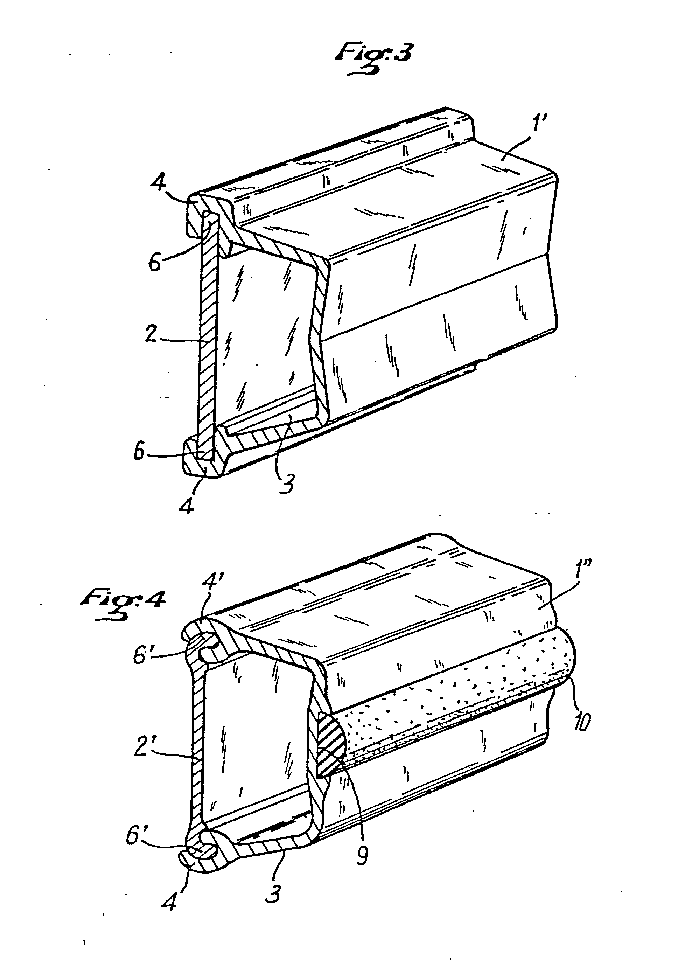

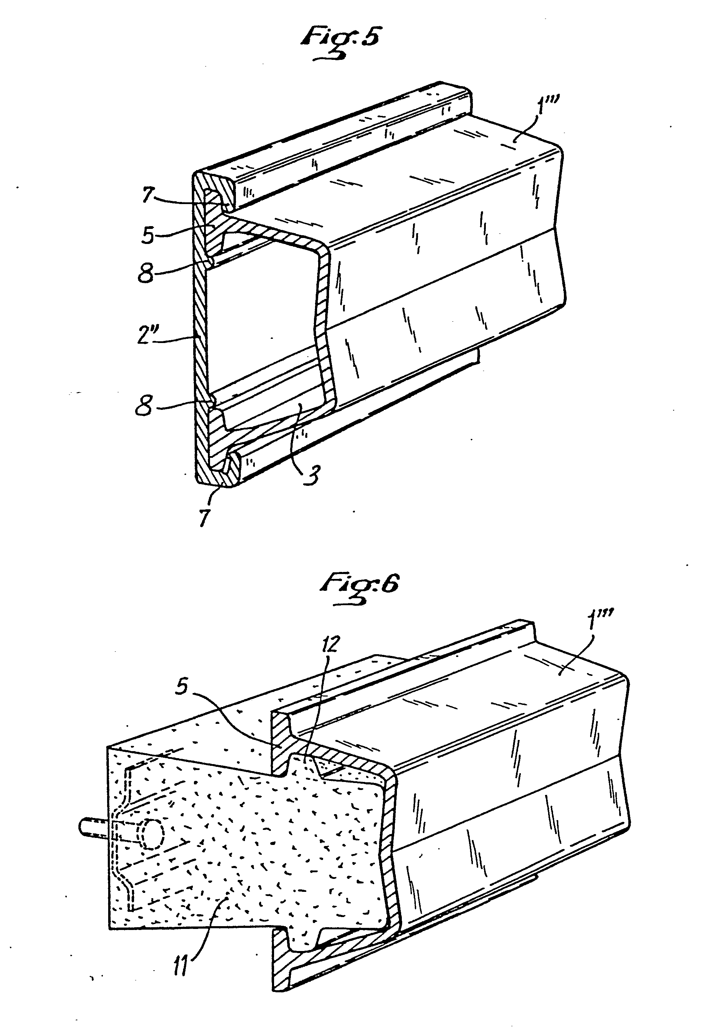

Une des caractéristiques du profilé précédent réside dans le fait qu'il peut être associé au moins localement dans les zones de moment fléchissant maximum, lorsque celui-ci est soumis à des efforts, à une plaque de fermeture telle que 2-2'-2" déterminant par conséquent des sections closes 3 telles qu'illustrées aux figures 3 à 5 qui confèrent une meilleure résistance à l'ensemble résultant. On voit que pour ce faire, le profilé 1 qui comporte une face frontale 21 et des bordures supérieure et inférieure 22 s'achevant par des rebords 4-4' (fig. 3 et 4) ou des semelles 5 (fig. 5) coopère respectivement avec les bords 6-6' ou 7-8 de la plaque de fermeture. Une telle disposition empêche le profilé 1 de s'ouvrir ou de se fermer lors d'un impact dont la force est comprise dans des limites prévues.

Le montage est effectué par coulissement mutuel des plaques de fermeture et du profilé jusqu'à leur localisation adéquate ; les encastrements tels que 4-7 peuvent être consolidés par tous moyens connus, notamment par collage.

Dans la variante de la figure 4, on voit qu'on peut aménager un logement frontal 9 en forme de queue d'aronde dans l'épaisseur du profilé 1", ouvert vers l'extérieur, dans lequel on introduit un bourrelet 10 en élastomère ou en matériau thermoplastique.

Outre la plaque de fermeture 2, le profilé 1"' peut comporter des absorbeurs d'énergie 11 en matière synthétique expansée, de préférence semi-rigide, tels qu'en polyuréthannes par exemple. La figure 6 montre qu'une possibilité de solidarisation entre le profilé 1"' et les absorbeurs 11 peut s'effectuer par la coopération des semelles 5 du premier avec des bourrelets 12 venus à cet effet à la surface de ces derniers ; ils sont obtenus de façon comme en soi en élastomères divers, tels qu'en caoutchouc naturel, les polyuréthannes, ou en matières thermoplastiques du type polyamides, polypropylène, etc.

Par ailleurs, on voit à la figure 1 que la forme des rebords 4 du profilé 1 est également utilisable pour la fixation des contre-lames latérales de support 13, dont les extrémités 14 sont introduites entre les dits rebords 4.

De la même façon, des flasques latérales 15 peuvent être rapportées, en étant partiellement introduites à la fois dans l'ouverture de section 16 du profilé 1 et entre ses rebords 4, respectivement par ces zones 17 et 18, ou bien surmoulées sur le profilé 1 comme cela est visible à la figure 2 en 19.

Dans ce cas on peut profiter de l'opération ci-dessus pour faire venir simultanément de moulage des butoirs 20.

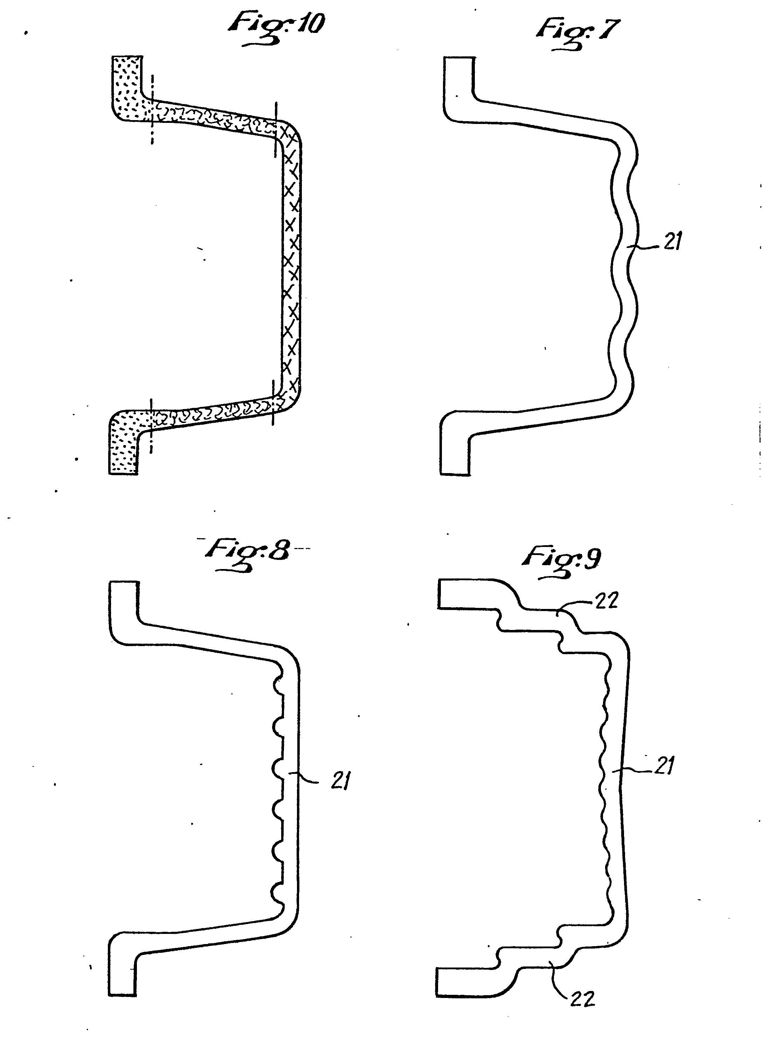

Les variantes de structure du profilé 1 illustrées aux figures 7 à 10 ont pour but de pallier certaines difficultés inhérentes au procédé de pultrusion.

En effet, lors de la traction du profilé qui est effectuée pour faire avancer le matériau composite à travers la filière courbe de conformation, on peut assister à un déplacement des fils continus de renfort, qui peuvent dans ces conditions se retrouver finalement en dehors des zones de renfort escomptées. On remédie à ce phénomène indésirable en utilisant les surfaces de filières ondulées, dans les dépressions desquelles les fils de renfort sont guidés. Il leur est par conséquent beaucoup plus difficile de quitter les zones qui leurs sont assignées et qui déterminent les caractéristiques de résistance mécanique désirées du produit final.

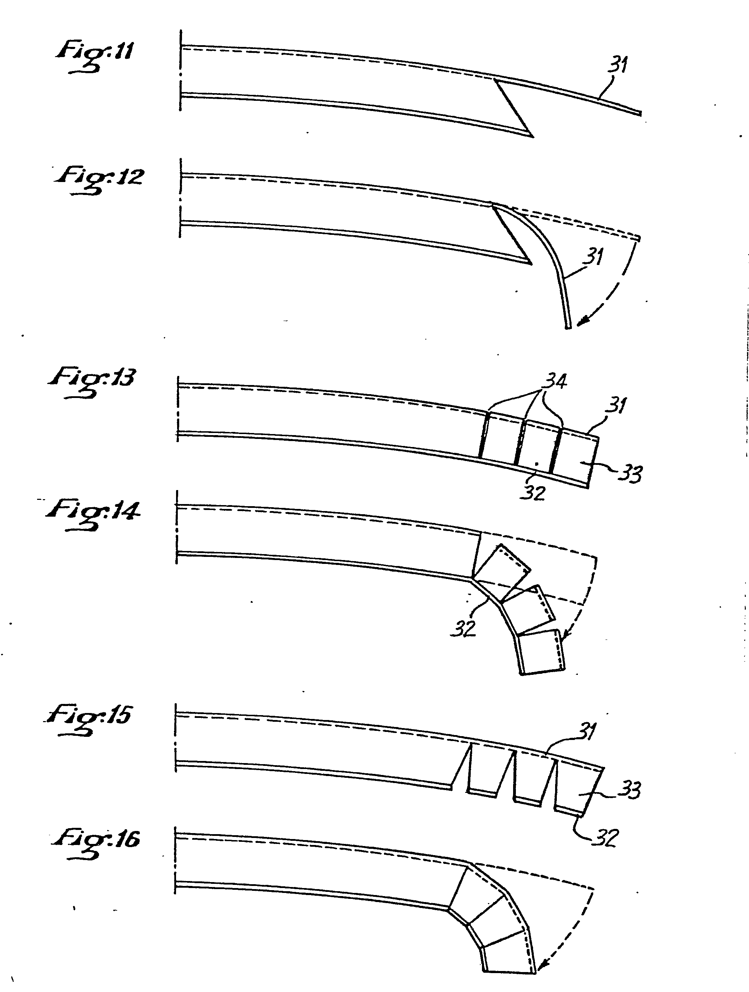

Les profilés ainsi obtenus sont illustrés aux figures 7 à 10. A la figure 7, on voit que les ondulations portent à la fois sur les faces externes et internes de la seule partie frontale 21 du profilé, tandis qu'à la figure 8 seule la face interne comporte des ondulations, le profilé étant conformé entre un poinçon porteur d'ondulations et une matrice lisse. On pourrait naturellement inverser cette disposition sans sortir de l'invention.

A la figure 9, on remarque que non seulement la face frontale 21 est porteuse d'ondulation, mais également des bordures supérieure et inférieure 22.

Dans le cas de la figure 10, la filière courbe présente un profil évolutif tel que sur une fraction de sa longueur (inférieure aux 2/3 du total), la conformation du produit présente des ondulations du type de celles qui sont illustrées aux figures 7 à 9, tandis que sur le restant de sa longueur, la filière redevient lisse. Le produit résultant présente donc à la fois l'avantage de posséder les fils de renforcement localisés ou endroits adéquats, et de présenter un aspect de surface conventionnel.

Les figures suivantes 11 à 16 illustrent des solutions apportées au problème des profilés qui doivent présenter des rayons de courbure variables. En effet, le procédé de pultrusion donne lieu à des produits dont le rayon de courbure est constant. Mais il est en général souhaitable de donner aux pare-chocs finaux une forme adaptée à la carrosserie correspondante, et en particulier de faire en sorte que ses extrémités soient enveloppantes.

Une première possibilité est représentée à la figure 11, selon laquelle le profilé courbe obtenu par pultrusion est usiné avec enlèvement de matière de telle façon que ses extrémités ne comportent plus que la façade antérieure 31, facile à courber (fig. 12).

Une variante est illustrée à la figure 13 selon laquelle ce sont les semelles de la face postérieure 32 des extrémités du profilé qui dans ce cas demeurent intactes, tandis que la partie frontale du profilé ainsi que les bordures latérales supérieure et inférieure subissent une série d'entailles 34 permettant la courbure selon un rayon différent (fig. 14).

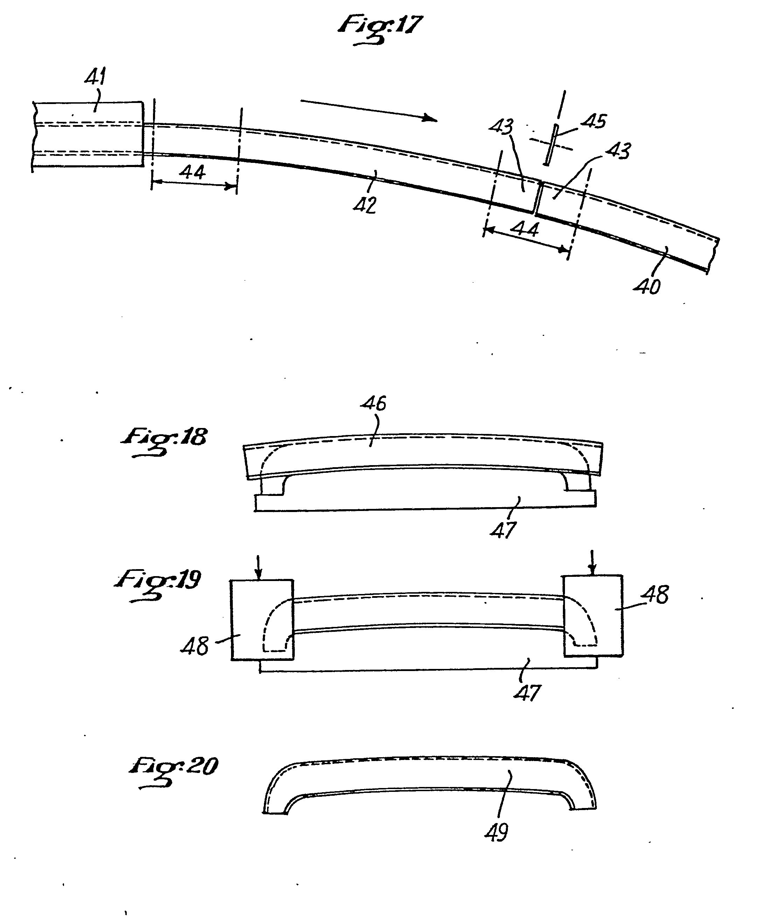

La figure 15, est une variante symétrique de la précédente, selon laquelle les entailles sont effectuées par l'arrière à travers les semelles 32 et les bordures latérales 33, ne laissant intacte que la façade 31. Après courbure, les bordures peuvent être reconstituées en surfaces continues, par exemple par collage (fig. 16).

Les profilés du type ci-dessus sont généralement utilisés comme inserts, mis en moule et surmoulés avec des produits thermoplastiques ou thermodurcissables tels que le PVC, les polyamides, les polyuréthannes ou les polyesters. Cette opération bloque alors les extrémités usinées selon les façons évoquées ci-dessus, le profilé servant d'armature à l'ensemble.

Une modification du rayon de courbure des extrémités du profilé peut encore être effectuée par voie thermique, agissant sur des matières thermoplastiques ou thermodurcissables.

Ceci est schématisé à la figure 17, qui représente un profilé 40 sortant en continu de la filière de conformation 41.

Selon ce mode opératoire, la réticulation du profilé n'est effectuée que sur la partie centrale 42, à l'exclusion de ses extrémités 43 qui ne sont que gélifiées ; ceci est obtenu par interruption momentanée et localisée du chauffage par haute fréquence, qui est de ce fait effectué de façon discontinue.

Par suite les zones 44 du profilé issu de la filière de mise en forme, tout en demeurant à l'état gélifié non réticulé, arrivent à un poste de découpage 45 qui les sectionne en deux parties égales 43.

Les éléments 46 obtenus sont alors repris sur un outil de presse (fig. 18 - 19) constitué d'un poinçon 47 de forme adéquate et de deux matrices 48 complémentaires, agissant sur les extrémités non réticulées 43, les mettant en forme et finalement les cuisant pour donner lieu au profilé définitif 49 de la figure 20, présentant des rayons de courbure différents.

Comme dans le cas des profilés décrits précédemment, ces derniers peuvent servir d'inserts pour la réalisation de pare-chocs par surmoulage, cette opération pouvant simultanément donner lieu à la formation de divers éléments intégrés, tels que des flasques latérales,
des butoirs, etc.

Enfin, on ne sortirait pas de la présente invention en utilisant les
techniques précédentes de modification du rayon de courbure initial par
usinage ou thermiquement, pour agir sur des zones du profilé différentes
de ses extrémités.

REVENDICATIONS

1. Pare-chocs composite pour véhicule automobile, essentiellement obtenu par surmoulage d'un profilé galbé résultant de la pultrusion de fils ou de mèches de verre, imprégnés de résine synthétique durcissable à travers une filière présentant un rayon de courbure constant, caractérisé par le fait que ledit profilé est constitué d'une face frontale prolongée par des bordures supérieure et inférieure qui lui sont sensiblement perpendiculaires et dont les extrémités libres présentent des rebords coopérants de préférence avec des éléments de forme correspondante d'au moins une plaque de fermeture dudit profilé, localisé en particulier dans les zones de moment fléchissant maximum de ce dernier lorsqu'il est soumis à des efforts.

2. Pare-chocs composite selon la revendication 1, caractérisé en ce que la forme de la section des rebords du profilé galbé est utilisée pour la fixation complémentaire d'éléments annexes tels que des absorbeurs d'énergie, des contre-lames latérales de support et des flasques latérales.

3. Pare-chocs composite selon les revendications 1 et 2, caractérisé en ce qu'au moins l'une des faces interne et externe de la section du profilé galbé comporte des ondulations résultant de la forme ondulée des filières utilisées, les creux des ondulations de ces dernières servant de guide pour les fils de renfort, dont la localisation est ainsi précisément déterminée dans la structure du profilé.

4. Pare-chocs composite selon les revendications 1 et 2, caractérisé en ce que les faces de la section du profilé galbé sont lisses au stade final de leur fabrication, mais sont passées par un stade intermédiaire ondulé, duquel découle une localisation déterminée des fils de renfort au cours de la traversée de la filière de conformation dont une première partie possède une surface ondulée, le parcours suivant étant effectué au travers de faces lisses.

5. Pare-chocs composite selon les revendications 1 et 2, caractérisé en ce que le profilé galbé présente plus d'un rayon de courbure.

6. Pare-chocs composite selon la revendication 5, caractérisé en ce que l'on modifie le rayon de courbure d'une zone du profilé galbé après avoir affaibli localement la résistance de ce dernier par enlèvement de matière, ou entaillage de sa section perpendiculairement aux plans de la face frontale et des bordures, mais en laissant intacte soit la face frontale, soit les rebords qui lui sont opposés.

7. Pare-chocs composite selon la revendication 5, caractérisé en ce que l'on modifie le rayon de courbure d'une zone du profilé galbé par voie thermique agissant localement par chauffage à coeur de la matière qui le compose lorsqu'elle est thermoplastique.

8. Pare-chocs composite selon la revendication 5, caractérisé en ce que le rayon de courbure du profilé galbé est localement modifié, lorsque la matière qui le compose est thermodurcissable, par pressage de zones qui n'ont pas été réticulées lors du passage dudit profilé dans la filière de conformation, puis cuisson finale desdits zones pour assurer leur réticulation.

9. Pare-chocs composite selon l'une quelconque des revendication précédentes, caractérisé en ce que le profilé galbé étant utilisé comme insert sur lequel on surmoule une matière thermoplastique ou thermodurcissable, cette opération est utilisée pour donner simultanément naissance à des éléments intégrés complémentaires, tels que des flasques latérales ou des butoirs.

0041413

*Fig.2*

19

22

20

21

19

20

*Fig.1*

11

2

11

13

4

13

14

4

16

1

15

18

17

15

0041413

*Fig.3*

*Fig.4*

Fig.5

Fig.6

*Fig.10*

*Fig.7*

*Fig.8*

*Fig.9*

0041413

5/6

Fig.11    31

Fig.12    31

Fig.13    34   31   33   32

Fig.14    32

Fig.15    31   33   32

Fig.16

*Fig.17*

*Fig.18*

*Fig.19*

*Fig.20*

**0041413**

Numéro de la demande

Office européen
des brevets

**RAPPORT DE RECHERCHE EUROPEENNE** EP 81 40 0663

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | FR - A - 2 258 987 (SULZER)  * Revendications; figures 1-5 * | 1 | B 60 R 19/06 |
| A | FR - A - 2 266 595 (RENAULT) | | |
| A | US - A - 4 022 505 (SACZAWA) | | |
| D | FR - A - 2 256 656 (RENAULT) | | |

**DOMAINES TECHNIQUES RECHERCHES (Int. Cl.³)**

B 60 R

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-09-1981 | PIRIOU |

OEB Form 1503.1  06.78